# FASCICULE DE BREVET EUROPEEN

(11) **EP 3 549 237 B1**
(45) Date de publication et mention de la délivrance du brevet: **25.11.2020**
(21) Numéro de dépôt: 17816952.0
(22) Date de dépôt: 30.11.2017
(51) Int. Cl.: H02K 1/22, H02K 1/30, H02K 3/32

(54) **ROTOR POUR MACHINE ÉLECTRIQUE TOURNANTE**
ROTOR FÜR EINE ROTIERENDE ELEKTRISCHE MASCHINE
ROTOR FOR A ROTATING ELECTRICAL MACHINE

(30) Priorité: 30.11.2016 FR 1661667
(43) Date de publication de la demande: 09.10.2019
(73) Titulaire: Valeo Equipements Electriques Moteur, 94046 Créteil Cedex (FR)
(72) Inventeur: DUFOUR, Guillaume, 62630 Etaples sur Mer (FR); KADIRI, Mostafa, 62630 Etaples sur Mer (FR); DJEBBAR, Amar, 62630 Etaples sur Mer (FR); POUCHELLE, Benjamin, 62630 Etaples sur Mer (FR); LANGLET, Nicolas, 62630 Etaples sur Mer (FR); LEURIDAN, Pierre-Yves, 62630 Etaples sur Mer (FR)
(74) Mandataire: Ricard, Amandine
(86) Numéro de dépôt international: PCT/FR2017/053313
(87) Numéro de publication internationale: WO 2018/100309

(56) Documents cités:
- WO-A1-2011/058254
- WO-A1-2014/199074
- WO-A2-2015/145002
- FR-A1- 2 612 349
- FR-A1- 2 895 165
- US-A1- 2010 019 607

## Description

L'invention concerne notamment un rotor muni d'un dispositif isolant pour une bobine rotorique pour une machine électrique tournante.

L'invention trouve une application particulièrement avantageuse dans le domaine des machines électriques tournantes telles que les alternateurs, les alterno-démarreurs ou encore les machines réversibles. On rappelle qu'une machine réversible est une machine électrique tournante apte à travailler de manière réversible, d'une part, comme générateur électrique en fonction alternateur et, d'autre part, comme moteur électrique par exemple pour démarrer le moteur thermique du véhicule automobile.

Une machine électrique tournante comprend un rotor mobile en rotation autour d'un axe et un stator fixe entourant le rotor. En mode alternateur, lorsque le rotor est en rotation, il induit un champ magnétique au stator qui le transforme en courant électrique afin d'alimenter l'électronique du véhicule et de recharger la batterie. En mode moteur, le stator est alimenté électriquement et induit un champ magnétique entraînant le rotor en rotation.

Le rotor a une structure à griffes comprenant un bobinage d'excitation et deux roues polaires comprenant, chacune, des griffes agencées de manière à être insérées entre deux griffes consécutives de l'autre roue polaire. Le rotor comporte, en outre, une pluralité d'éléments magnétiques agencés respectivement entre deux griffes adjacentes de deux roues polaires distinctes, c'est-à-dire dans un espace inter-griffe. Ces éléments magnétiques sont notamment utilisés pour empêcher les fuites de flux magnétique entre les griffes formant les pôles magnétiques. Il a, en effet, été constaté dans une configuration de rotor sans élément magnétique qu'une partie important du flux magnétique créé par la bobine du rotor passait par des chemins de fuites au lieu de traverser l'entrefer de la machine pour aller provoquer l'induction désirée dans les pôles magnétiques du stator.

Chaque griffe comporte, sur une surface externe, une lèvre de maintien de l'élément magnétique s'étendant circonférentiellement en regard d'une griffe adjacente de l'autre roue polaire. L'élément magnétique est alors maintenu par deux lèvres de maintien de deux griffes adjacentes, chacune des griffes appartenant à une roue polaire distincte.

Cependant, de telles lèvres empêchent le déplacement de l'élément magnétique uniquement dans une direction radiale vers l'extérieur du rotor. La position de l'élément magnétique n'est donc pas garantie précisément dans l'espace inter-griffe.

De plus, lors des étapes de positionnement des ventilateurs sur le rotor et en particulier à cause du procédé de soudage par « courant traversant » consistant à faire passer un fort courant dans le noyau du rotor, les éléments magnétiques subissent un champ magnétique contraire à leur orientation magnétique. L'effort résultant de ce champ magnétique entraine un déplacement ou une rotation des éléments magnétiques dans l'espace inter-griffe voire, dans certains cas, lesdits éléments peuvent sortir de l'espace inter-griffe.

Les documents WO2011/058254 et US2010/019607 divulguent des rotors selon l'art antérieur.

La présente invention vise à permettre d'éviter les inconvénients de l'art antérieur. Ainsi, la présente invention vise à garantir le bon maintien en position des éléments magnétiques en particulier lors de l'opération d'assemblage du rotor.

A cet effet, la présente invention a donc pour objet un rotor pour machine électrique tournante notamment pour véhicule automobile.

Selon la présente invention, le rotor est monté rotatif autour d'un axe et comporte :
- un corps de rotor formé par une paire de roues polaires, chaque roue polaire comportant une pluralité de griffes s'étendant à partir d'un flasque, et un noyau positionné axialement entre les flasques, lesdites roues polaires étant montées de telle sorte que chaque griffe d'une roue polaire s'étende vers l'autre roue polaire en étant agencée entre l'espace existant entre deux griffes consécutives de l'autre roue polaire ;
- au moins un élément magnétique agencé entre deux griffes adjacentes de deux roues polaires distinctes ;
- un enroulement rotorique agencée radialement entre le noyau et les griffes ; et
- un dispositif d'isolation agencé entre l'enroulement rotorique et le corps de rotor, le dispositif d'isolation comportant une pluralité de pétales, chaque pétale comporte une partie centrale agencée de manière à recouvrir au moins en partie une surface interne de la griffe associée.

En outre, selon la présente invention au moins un pétale comporte une partie latérale agencée pour s'étendre en regard d'au moins une portion de l'élément magnétique de manière à participer au maintien de l'élément magnétique.

La partie latérale permet d'empêcher les mouvements de l'élément magnétique hors de l'espace inter-griffe que ce soit des mouvements de translation ou de rotation lors de l'assemblage du rotor et en particulier lors de l'étape de soudage des ventilateurs sur le corps de rotor. Cela permet d'optimiser le positionnement de l'élément magnétique et donc d'optimiser la réduction des fuites de flux magnétique.

Selon une réalisation, la partie latérale s'étend radialement entre l'élément magnétique et l'enroulement rotorique.

Selon une réalisation, la machine électrique tournante comporte une pluralité d'éléments magnétiques, chacun étant agencé en regard d'au moins une partie latérale d'un pétale associé.

Selon une réalisation, au moins 30%, et notamment 33%, d'une surface de l'élément magnétique, dans un plan sensiblement circonférentiel, est en regard d'au moins une partie latérale. Selon une réalisation, toute la surface de l'élément magnétique, dans un plan sensiblement circonférentiel, est en regard d'au moins une partie latérale.

Selon une réalisation, la partie latérale présente une largeur maximale qui s'étend dans une direction sensiblement circonférentielle sur au moins la moitié de la largeur circonférentielle de l'élément magnétique.

Selon une réalisation, la partie latérale présente une hauteur maximale qui s'étend dans une direction sensiblement axiale sur au moins la moitié de la hauteur axiale de l'élément magnétique.

Selon une réalisation, la partie latérale présente une hauteur axiale égale à celle de la partie centrale. Dans une variante de réalisation, la partie latérale peut présenter une hauteur axiale inférieure ou supérieure à celle de la partie centrale.

Selon une réalisation, une épaisseur radiale de la partie latérale est sensiblement identique à l'épaisseur radiale de la partie centrale.

Selon une réalisation, la partie latérale présente une section circonférentielle en forme de quadrilatère telle qu'un parallélogramme ou un trapèze. Dans une variante de réalisation, la partie latérale présente une section circonférentielle de forme triangulaire. Dans une autre variante de réalisation, la partie latérale présente une section circonférentielle de forme d'une partie d'un cercle ou d'une ellipse.

Selon une réalisation, la partie latérale est en contact avec l'élément magnétique. Dans une variante de réalisation, un jeu est présent entre la partie latérale et l'élément magnétique.

Selon une réalisation, un pétale comporte une unique partie latérale s'étendant dans un seul des deux espaces inter-griffes adjacent à la griffe associée au pétale.

Selon une autre réalisation, un pétale comporte aux moins deux parties latérales s'étendant respectivement dans les deux espaces inter-griffes adjacents à la griffe associé au pétale.

Selon une réalisation, chaque griffe d'une unique roue polaire présente un pétale avec au moins une portion latérale. Il peut s'agir soit de la roue polaire avant positionnée axialement le plus proche d'une poulie soit de la roue polaire arrière positionnée axialement le plus loin de ladite poulie.

Selon une réalisation, un élément magnétique est agencé en regard d'une unique partie latérale appartenant à un pétale associé à une des roues polaires.

Selon une réalisation, chaque griffe des deux roues polaires présente un pétale avec au moins une portion latérale.

Selon une réalisation, un élément magnétique est agencé en regard d'au moins deux parties latérales appartenant, chacune, à un pétale associé à une roue polaire distincte.

Selon une réalisation, le pétale présente une forme symétrique. Dans une variante de réalisation, le pétale peut présenter une forme dissymétrique.

Selon une réalisation, la partie latérale est issue de matière avec la partie centrale.

Selon une réalisation, chaque pétale est issu de matière avec la portion de liaison qui est elle-même issue de matière avec la portion cylindrique.

Selon une réalisation, le dispositif d'isolation est réalisé en matériau électriquement isolant.

Selon une réalisation, l'élément magnétique est positionné radialement, au moins en partie, entre au moins une partie latérale et une lèvre s'étendant à partir de la griffe.

Selon une réalisation, l'élément magnétique est un aimant permanent.

La présente invention a également pour objet une machine électrique tournante. La machine électrique tournante peut, avantageusement, former un alternateur, un alterno-démarreur ou une machine réversible.

La présente invention pourra être mieux comprise à la lecture de la description détaillée qui va suivre, d'exemples de mise en œuvre non limitatifs de l'invention et de l'examen des dessins annexés, sur lesquels :
- la figure 1 représente, schématiquement et partiellement, une vue en coupe d'une machine électrique tournante selon un exemple de mise en œuvre de l'invention,
- la figure 2 représente, schématiquement et partiellement, une vue en perspective d'un dispositif d'isolation de la figure 1,
- la figure 3 représente, schématiquement et partiellement, une vue en perspective d'un exemple de disposition d'un élément magnétique et d'un dispositif d'isolation sur une roue polaire selon un exemple de mise en œuvre de l'invention,
- la figure 4 représente une vue schématique en deux dimension de la disposition de deux parties latérales appartenant chacune à un pétale respectif du dispositif d'isolation par rapport à une surface de l'élément magnétique selon un premier exemple de mise en œuvre de l'invention, et
- la figure 5 représente une vue schématique en deux dimension de la disposition de deux parties latérales appartenant chacune à un pétale respectif du dispositif d'isolation par rapport à une surface de l'élément magnétique selon un deuxième exemple de mise en œuvre de l'invention.

Les éléments identiques, similaires ou analogues conservent les mêmes références d'une figure à l'autre.

Les modes de réalisation qui sont décrits dans la suite ne sont nullement limitatifs ; on pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. En particulier toutes les variantes et tous les modes de réalisation décrits sont combinables entre eux si rien ne s'oppose à cette combinaison sur le plan technique. Dans un tel cas, mention serait faite dans la présente description.

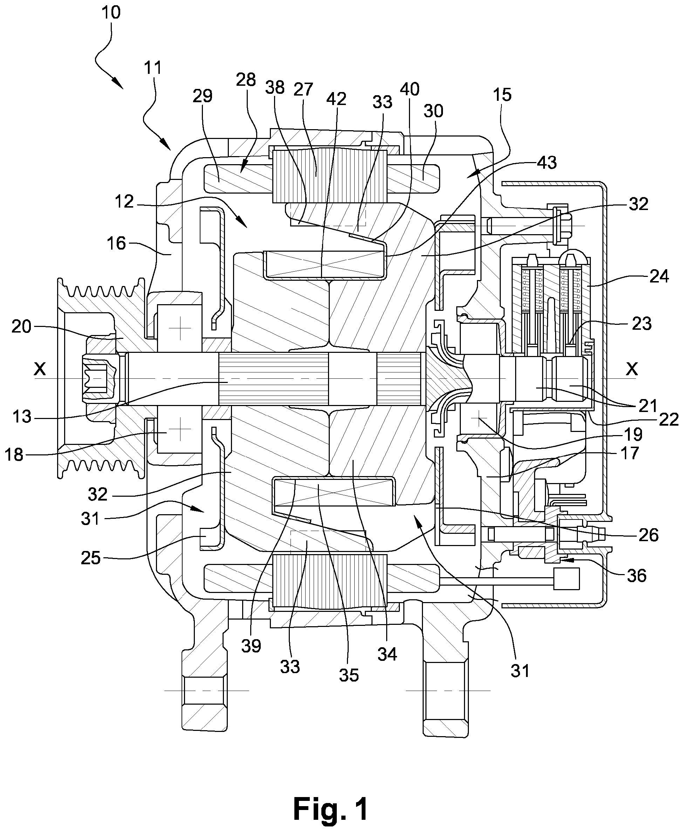

La figure 1 représente une machine électrique tournante 10 compacte et polyphasée, notamment pour véhicule automobile. Cette machine électrique tournante 10 transforme de l'énergie mécanique en énergie électrique, en mode alternateur, et peut fonctionner en mode moteur pour transformer de l'énergie électrique en énergie mécanique. Cette machine électrique tournante 10 est, par exemple, un alternateur, un alterno-démarreur ou une machine réversible.

La machine électrique tournante 10 comporte un carter 11. A l'intérieur de ce carter 11, elle comporte, en outre, un arbre 13, un rotor 12 solidaire en rotation de l'arbre 13 et un stator 15 entourant le rotor 12. Le mouvement de rotation du rotor 12 se fait autour d'un axe X.

Dans la suite de la description, les dénominations axiales, radiales, extérieures et intérieures se réfèrent à l'axe X traversant en son centre l'arbre 13. La direction axiale correspond à l'axe X alors que les orientations radiales correspondent à des plans concourants, et notamment perpendiculaires, à l'axe X. Pour les directions radiales, les dénominations extérieure ou intérieure s'apprécient par rapport au même axe X, la dénomination intérieure correspondant à un élément orienté vers l'axe, ou plus proche de l'axe par rapport à un second élément, la dénomination extérieure désignant un éloignement de l'axe.

Dans cet exemple, le carter 11 comporte un palier avant 16 et un palier arrière 17 qui sont assemblés ensemble. Ces paliers 16, 17 sont de forme creuse et portent, chacun, centralement un roulement à billes 18, 19 respectif pour le montage à rotation de l'arbre 13.

Une poulie 20 est fixée sur une extrémité avant de l'arbre 13, au niveau du palier avant 16, par exemple à l'aide d'un écrou en appui sur le fond de la cavité de cette poulie. Cette poulie 20 permet de transmettre le mouvement de rotation à l'arbre 13.

L'extrémité arrière de l'arbre 13 porte, ici, des bagues collectrices 21 appartenant à un collecteur 22. Des balais 23 appartenant à un porte-balais 24 sont disposés de façon à frotter sur les bagues collectrices 21. Le porte-balais 24 est relié à un régulateur de tension (non représenté).

Le palier avant 16 et le palier arrière 17 peuvent comporter, en outre, des ouvertures sensiblement latérales pour le passage de l'air en vue de permettre le refroidissement de la machine électrique tournante par circulation d'air engendrée par la rotation d'un ventilateur avant 25 sur la face axiale avant du rotor 12, c'est-à-dire au niveau du palier avant 16 et d'un ventilateur arrière 26 sur la face axiale arrière du rotor, c'est-à-dire au niveau du palier arrière 17.

Dans cet exemple, le rotor 12 est un rotor à griffe et le stator 15 comporte un corps 27 en forme d'un paquet de tôles doté d'encoches, par exemple du type semi fermée ou ouverte, équipées d'isolant d'encoches pour le montage d'un bobinage électrique 28. Ce bobinage 28 traverse les encoches du corps 27 et forment un chignon avant 29 et un chignon arrière 30 de part et d'autre du corps du stator. Le bobinage 28 est connecté, par exemple, en étoile ou encore en triangle.

Par ailleurs, le bobinage 28 est formé d'une ou plusieurs phases. Chaque phase comporte au moins un conducteur traversant les encoches du corps de stator 27 et forme, avec toutes les phases, les chignons. Le bobinage 28 est relié électriquement à un ensemble électronique 36.

L'ensemble électronique 36 comporte au moins un module électronique de puissance permettant de piloter une phase du bobinage 28. Ce module de puissance forme un pont redresseur de tension pour transformer la tension alternative générée par l'alternateur 10 en une tension continue pour alimenter notamment la batterie et le réseau de bord du véhicule.

Lorsque le bobinage électrique est alimenté électriquement à partir des balais, le rotor 4 est magnétisé et devient un rotor inducteur avec formation de pôles magnétiques Nord-Sud au niveau des griffes. Ce rotor inducteur crée un courant induit alternatif dans le stator induit lorsque l'arbre 3 est en rotation. Le pont redresseur 9 transforme alors ce courant induit alternatif en un courant continu, notamment pour alimenter les charges et les consommateurs du réseau de bord du véhicule automobile ainsi que pour recharger sa batterie.

Le rotor 12 comporte un corps de rotor formé par deux roues polaires 31 et un noyau 34. Chaque roue polaire 31 est formée d'un flasque 32 et d'une pluralité de griffes 33 s'étendant sensiblement axialement à partir du flasque et formant des pôles magnétiques. Le flasque 32 est d'orientation transversale et présente, par exemple, une forme sensiblement annulaire. Les roues polaires 31 sont montées de telle sorte que chaque griffe 33 d'une roue polaire s'étende vers l'autre roue polaire en étant agencée entre l'espace existant entre deux griffes consécutives de l'autre roue polaire, cet espace étant appelé espace inter-griffe. Le noyau 34 est de forme sensiblement cylindrique et est intercalé axialement entre les roues polaires 31. Le noyau 34 peut être formé par un cylindre isolé, par un cylindre appartenant à une des roues polaires ou encore par deux demi noyaux appartenant chacun à une des roues polaires.

Dans le mode de réalisation décrit ici, le rotor 12 comporte au moins un élément magnétique 38 interposé entre deux griffes 33 adjacentes de deux roues polaires 31 distinctes, c'est-à-dire dans l'espace inter-griffe. De préférence, le rotor 12 comporte une pluralité d'éléments magnétiques 38 agencés chacun dans un espace inter-griffe.

Par exemple, un élément magnétique 38 est un aimant permanant. Cet aimant permanant peut être formé d'un matériau terre rare ou d'un matériau ferrite.

Le rotor 12 comporte, en outre, un enroulement rotorique 35 agencée radialement entre le noyau 34 et les griffes 33. L'enroulement rotorique 35 est par exemple une bobine enroulée autour du noyau 34 et permettant l'excitation du rotor via le collecteur 22.

De plus, le rotor 12 comporte un dispositif d'isolation 39 agencé entre l'enroulement rotorique 35 et le corps de rotor. Le dispositif d'isolation 39 est réalisé en matériau électriquement isolant et permet donc d'isoler électriquement l'enroulement rotorique 35 du corps de rotor.

Par exemple, le dispositif d'isolation est formé d'un matériau plastique mais tout autre matériau électriquement isolant tel que du carton ou un textile pourrait être utilisé.

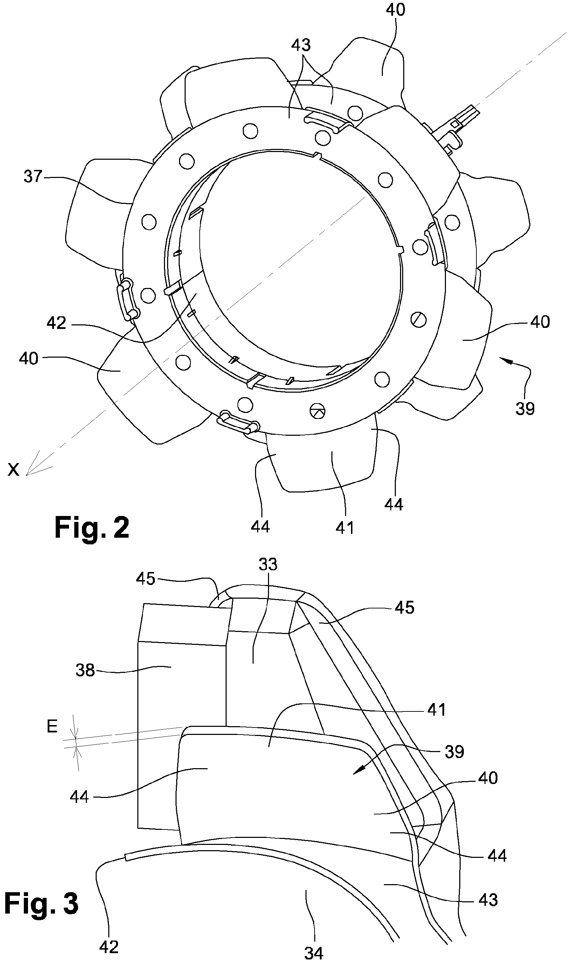

Comme bien visible sur la figure 2, le dispositif d'isolation 39 comporte une partie cylindrique 42, deux portions de liaison 43 et une pluralité de pétales 40. La partie cylindrique 42 entoure le noyau 34 et est disposé radialement entre le noyau et l'enroulement rotorique 35. Les portions de liaison 43 s'étendent à partir de la partie cylindrique 42 respectivement de part et d'autre de ladite portion cylindrique. Plus précisément, chaque portion de liaison s'étend dans une direction sensiblement radiale à partir d'une extrémité axiale de la portion cylindrique 42 de manière à être en contact avec un des flasques 32. Les pétales 40 s'étendent respectivement à partir des portions de liaison 43, chaque pétale 40 étant agencé pour être en regard à la fois d'une surface interne de la griffe 33 associée et d'une portion de l'élément magnétique 38 adjacent à la griffe.

Chaque pétale 40 est issu de matière avec la portion de liaison 43 qui est elle-même issue de matière avec la portion cylindrique 42. Dans une variante de réalisation, au moins une des portions du dispositif d'isolation 39 pourrait être rapportée et fixée aux autres portions par tout moyen.

Afin de faciliter le pliage du pétale 40 par rapport à la portion de liaison 43, une rainure 37 peut être disposée entre le pétale et la portion de liaison.

Le pétale comporte une partie centrale 41 en regard d'une griffe 33 et au moins une partie latérale 44 en regard d'un élément magnétique 38 adjacent à ladite griffe. Chaque partie latérale 44 participe au maintien de l'élément magnétique 38 dans l'espace inter-griffe et permet de garantir précisément sa position en particulier lors des opérations d'assemblage du rotor 12.

La partie latérale 44 s'étend à partir de la partie centrale 41 dans une direction sensiblement circonférentielle. La partie latérale est donc positionnée dans l'espace inter-griffe adjacent à la griffe 33 en regard de l'élément magnétique 38. La partie latérale est ainsi disposée radialement entre l'enroulement rotorique 35 et l'élément magnétique 38.

De préférence, la partie latérale 44 est issue de matière avec la partie centrale 41. Ainsi, la partie latérale et la partie centrale forment une seule pièce qui est formée au cours d'une même opération.

La partie centrale 41 est en contact avec la surface interne de la griffe 33 associée. De préférence, la partie centrale 41 présente une forme correspondante à la forme de la surface interne de la griffe 33 associée. Dans l'exemple représenté ici sur la figure 3, la partie centrale 41 s'étend sur toute la largeur circonférentielle de la griffe 33 et sur une partie de la hauteur axiale de ladite griffe. Par exemple la partie centrale s'étend sur une hauteur axiale égale à la moitié de la hauteur axiale de la griffe.

Lors des opérations d'assemblage du rotor 12 et en particulier lors de l'opération de fixage des ventilateurs 25, 26 sur le corps de rotor, les efforts s'exerçant sur l'élément magnétique 38 peuvent amener celui-ci à se déplacer en translation ou en rotation dans l'espace inter-griffe. Si les efforts sont importants, l'élément magnétique 38 peut venir en appui sur la partie latérale 44 du pétale 40 qui empêche l'élément magnétique 38 de sortir de l'espace inter-griffe. La partie latérale 44 peut alors être amenée à se déformer sous la pression de l'élément magnétique 38 et engendrer un effet ressort maintenant ledit élément en place.

Lors du fonctionnement de la machine électrique tournante 10, l'élément magnétique 38 peut être en contact avec la partie latérale 44 afin de garantir son positionnement si les sollicitations subies par ledit élément sont fortes.

Dans une variante de réalisation, si les sollicitations subies par l'élément magnétique 38 lors du fonctionnement de la machine électrique tournante 10 sont faibles, un jeu peut exister entre la partie latérale 44 et ledit élément. Ce jeu peut, ou non, être comblé par un isolant tel que de la résine lors de l'opération d'imprégnation du rotor 12. L'isolant peut alors servir de colle et participer au maintien l'élément magnétique 38 lors du fonctionnement de la machine électrique tournante 10.

Dans l'exemple de réalisation représenté sur la figure 3, la griffe 33 présente une lèvre 45 s'étendant en saillie dans une direction sensiblement circonférentielle. La lèvre 45 s'étend à partir d'une surface externe de la griffe 33 et est située dans l'espace inter-griffe adjacent à ladite griffe. L'élément magnétique 38 est positionné radialement, au moins en partie, entre le pétale 40 et la lèvre 45. De préférence, l'élément magnétique 38 est en contact de la lèvre 45 ce qui permet son maintien lors du fonctionnement de la machine électrique tournante 10.

Dans un premier mode de réalisation non représenté, un pétale 40 comporte une unique partie latérale 44 s'étendant dans l'un ou l'autre des deux espaces inter-griffes adjacent à la griffe 33 associée au pétale.

Dans un second mode de réalisation représenté sur les figures 2 et 3, un pétale 40 comporte aux moins deux parties latérales 44 s'étendant respectivement dans les deux espaces inter-griffes adjacents à la griffe 33 associé au pétale. Chaque partie latérale 44 s'étend dans une direction circonférentielle opposée l'une par rapport à l'autre de manière à s'étendre dans deux espaces inter-griffes distincts adjacents à la griffe 33. Chaque partie latérale 44 permet alors le maintien d'un élément magnétique 38 respectif.

Dans l'exemple de réalisation, chaque griffe 33 d'une même unique roue polaire 31 présente un pétale 40 avec une ou plusieurs portions latérales 44. Il peut s'agir soit de la roue polaire avant soit de la roue polaire arrière. Dans ce mode de réalisation, uniquement une des deux roues polaires 31 présente des parties latérales 44. Chaque élément magnétique 38 est alors maintenu par une seule partie latérale.

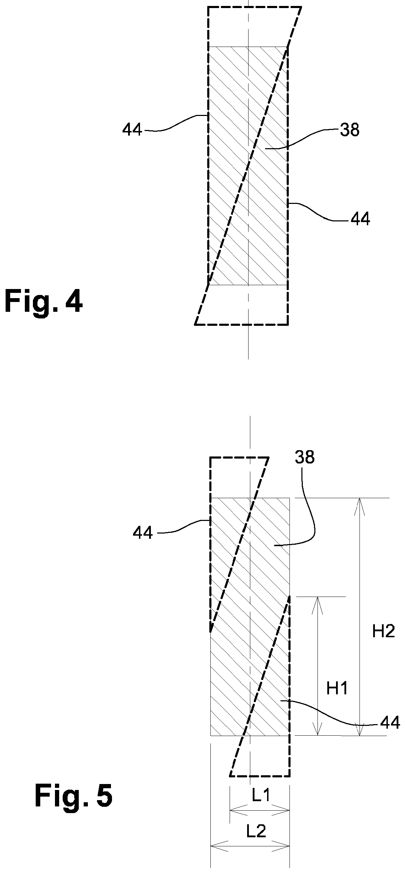

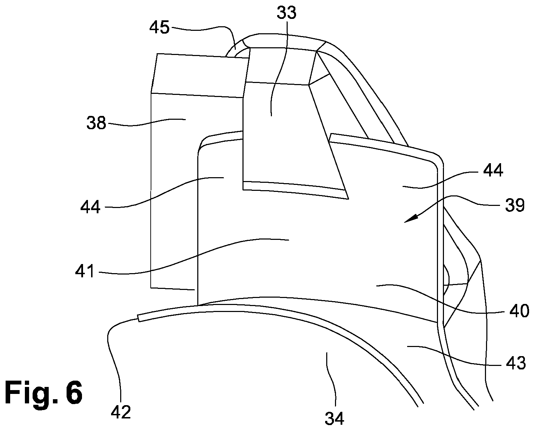

Dans un autre exemple de réalisation, chaque griffe 33 des deux roues polaires 31 présente un pétale 40 avec une ou plusieurs portions latérales 44. Chaque élément magnétique 38 est alors maintenu par au moins deux parties latérales comme représenté schématiquement sur les figures 4 et 5. En effet, dans cet exemple, un espace inter-griffe comporte au moins deux parties latérales 44, l'une appartenant à un pétale associé à une griffe de la roue polaire avant et l'autre appartenant à un pétale associé à une griffe de la roue polaire arrière. Chaque partie latérale s'étend en regard d'une même face interne de l'élément magnétique 38.

De plus, la partie latérale 44 présente une largeur dans une direction sensiblement circonférentielle, une hauteur dans une direction axiale et une épaisseur dans une direction radiale.

De préférence, comme représenté sur la figure 3, l'épaisseur E de la partie latérale 44 est identique à l'épaisseur radiale de la partie centrale 41.

Toujours de préférence, la partie latérale 44 présente une hauteur égale à celle de la partie centrale 41 comme représenté sur la figure 3. Dans une variante de réalisation, la partie latérale 44 peut présenter une hauteur inférieure ou supérieure à celle de la partie centrale 41.

De préférence, une hauteur maximale H1 de la partie latérale 44 est au moins égale à la moitié de la hauteur axiale H2 de l'élément magnétique 38. Dans l'exemple de réalisation de la figure 4, la hauteur maximale H1 de la partie latérale 44 est égale à la hauteur axiale H2 de l'élément magnétique 38.

De préférence, une largeur maximale L1 de la partie latérale 44 est au moins égale à la moitié de la largeur circonférentielle L2 de l'élément magnétique 38. Dans l'exemple de réalisation de la figure 4, la largeur maximale L1 de la partie latérale 44 est égale à la largeur circonférentielle L2 de l'élément magnétique 38.

Dans le mode de réalisation de la figure 4, toute la surface interne de l'élément magnétique 38, dans un plan sensiblement circonférentiel, est en regard des deux parties latérales 44. Ainsi, la somme des surfaces respectives des parties latérales 44 est égale à la surface interne de l'élément magnétique 38.

Dans le mode de réalisation de la figure 5, au moins 30%, et notamment 33%, de la surface de l'élément magnétique 38, dans un plan sensiblement circonférentiel, est en regard de deux parties latérales 44 appartenant chacune à un pétale 40 associé respectivement à la roue polaire avant ou la roue polaire arrière. Ainsi, dans cet exemple de réalisation, chaque partie latérale 44 couvre 16,5% de la surface de l'élément magnétique 38.

En outre, dans l'exemple de la figure 3, la partie latérale 44 présente une section circonférentielle en forme de quadrilatère et en particulier en forme de parallélogramme.

Dans un autre exemple de réalisation représentée sur les figures 4 et 5, la partie latérale 44 présente une section circonférentielle de forme triangulaire.

L'homme du métier comprendra que toute forme de section circonférentielle pour la partie latérale peut être envisagée sans sortir du cadre de l'invention.

Dans l'exemple de réalisation représenté ici, le pétale 40 qui comporte deux parties latérales 44 présente une forme symétrique par rapport à un axe axial passant par le milieu de la largeur circonférentielle du pétale 40. Ainsi, la partie latérale s'étendant dans un premier espace inter-griffe est identique, de manière symétrique par rapport à cet axe, à la partie latérale s'étendant dans l'autre espace inter-griffe opposé circonférentiellement au premier espace inter-griffe.

Dans une variante de réalisation non représenté, le pétale 40 peut présenter une forme dissymétrique par rapport à cet axe passant par le milieu de la largeur circonférentielle du pétale 40. Cette dissymétrie peut être due au fait que les deux parties latérales d'un même pétale peuvent avoir des formes ou dimensions différentes. En variante, cette dissymétrie peut être due au fait qu'une griffe 33 peut être inclinée dans le sens de rotation du rotor 12 ou dans le sens inverse de rotation. La partie centrale 41 du pétale 40 peut alors avoir une forme inclinée suivant l'inclinaison de ladite griffe 33. Comme précédemment, les deux parties latérales 44 peuvent avoir des formes et dimensions identiques ou différentes.

La présente invention trouve des applications en particulier dans le domaine des rotors pour alternateur ou machine réversible mais elle pourrait également s'appliquer à tout type de machine tournante.

Bien entendu, la description qui précède a été donnée à titre d'exemple uniquement et ne limite pas la présente invention qui est définie dans les revendications et dont on ne sortirait pas en remplaçant les différents éléments par tous autres équivalents.

## Revendications

1. Rotor pour une machine électrique tournante, notamment pour véhicule automobile, le rotor (12) est monté rotatif autour d'un axe (X) et comporte :
- un corps de rotor formé par une paire de roues polaires (31), chaque roue polaire comportant une pluralité de griffes (33) s'étendant à partir d'un flasque (32), et un noyau (34) positionné axialement entre les flasques, lesdites roues polaires (31) étant montées de telle sorte que chaque griffe d'une roue polaire s'étende vers l'autre roue polaire en étant agencée entre l'espace existant entre deux griffes consécutives de l'autre roue polaire ;
- au moins un élément magnétique (38) agencé entre deux griffes (33) adjacentes de deux roues polaires (31) distinctes ;
- un enroulement rotorique (35) agencée radialement entre le noyau (34) et les griffes (33) ; et
- un dispositif d'isolation (39) agencé entre l'enroulement rotorique (35) et le corps de rotor, le dispositif d'isolation comportant une pluralité de pétales (40), chaque pétale comporte une partie centrale (41) agencée de manière à recouvrir au moins en partie une surface interne de la griffe (33) associée ;
le rotor (12) étant **caractérisé en ce qu'**au moins un pétale (40) comporte une partie latérale (44) agencée pour s'étendre en regard d'au moins une portion de l'élément magnétique (38) de manière à participer au maintien de l'élément magnétique (38).

2. Rotor selon la revendication 1, **caractérisé en ce qu'**au moins 30%, et notamment 33%, d'une surface de l'élément magnétique (38), dans un plan sensiblement circonférentiel, est en regard d'au moins une partie latérale (44).

3. Rotor selon la revendication 2, **caractérisé en ce que** toute la surface de l'élément magnétique (38), dans un plan sensiblement circonférentiel, est en regard d'au moins une partie latérale (44).

4. Rotor selon l'une quelconque des revendications 1 à 3, **caractérisé en ce que** la partie latérale (44) présente une largeur maximale (L1) qui s'étend dans une direction sensiblement circonférentielle sur au moins la moitié d'une largeur (L2) circonférentielle de l'élément magnétique (38).

5. Rotor selon l'une quelconque des revendications 1 à 4, **caractérisé en ce que** la partie latérale (44) présente une hauteur maximale (H1) qui s'étend dans une direction sensiblement axiale sur au moins la moitié d'une hauteur axiale (H2) de l'élément magnétique (38).

6. Rotor selon l'une quelconque des revendications 1 à 5, **caractérisé en ce qu'**une épaisseur radiale (E) de la partie latérale (44) est sensiblement identique à une épaisseur radiale de la partie centrale (41).

7. Rotor selon l'une quelconque des revendications 1 à 6, **caractérisé en ce que** l'élément magnétique (38) est agencé en regard d'au moins deux parties latérales (44) appartenant, chacune, à un pétale (40) associé à une roue polaire (31) distincte.

8. Rotor selon l'une quelconque des revendications 1 à 6, **caractérisé en ce que** l'élément magnétique (38) est agencé en regard d'une unique partie latérale (44) appartenant à un pétale (40) associé à une des roues polaires (31).

9. Rotor selon l'une quelconque des revendications 1 à 8, **caractérisé en ce que** l'élément magnétique (38) est positionné radialement, au moins en partie, entre au moins une partie latérale (44) et une lèvre (45) s'étendant à partir de la griffe (33).

10. Machine électrique tournante notamment pour véhicule automobile comprenant un rotor selon l'une quelconque des revendications 1 à 9 et formant un alternateur ou un alterno-démarreur ou une machine réversible.

## Patentansprüche

1. Rotor für eine rotierende elektrische Maschine, insbesondere für ein Kraftfahrzeug, wobei der Rotor (12) um eine Achse (X) drehbar montiert ist und Folgendes aufweist:
- einen Rotorkörper, der durch ein Paar Polräder (31) ausgebildet ist, wobei jedes Polrad mehrere Klauen (33), die sich von einem Flansch (32) erstrecken, und einen axial zwischen den Flanschen positionierten Kern (34) aufweist, wobei die Polräder (31) so montiert sind, dass sich jede Klaue eines Polrads zum anderen Polrad erstreckt und dabei zwischen dem Raum, der zwischen zwei aufeinanderfolgenden Klauen des anderen Polrads liegt, angeordnet ist;
- zumindest ein magnetisches Element (38), das zwischen zwei benachbarten Klauen (33) von zwei separaten Polrädern (31) angeordnet ist;
- eine Rotorwicklung (35), die radial zwischen dem Kern (34) und den Klauen (33) angeordnet ist; und
- eine Isoliervorrichtung (39), die zwischen der Rotorwicklung (35) und dem Rotorkörper angeordnet ist, wobei die Isoliervorrichtung mehrere Blätter (40) aufweist, wobei jedes Blatt einen zentralen Teil (41) aufweist, der so angeordnet ist, dass er zumindest teilweise eine Innenfläche der zugeordneten Klaue (33) bedeckt;
wobei der Rotor (12) **dadurch gekennzeichnet ist, dass** zumindest ein Blatt (40) einen seitlichen Teil (44) aufweist, der so angeordnet ist, dass er sich gegenüber zumindest einem Abschnitt des magnetischen Elements (38) erstreckt, um am Halten des magnetischen Elements (38) mitzuwirken.

2. Rotor nach Anspruch 1, **dadurch gekennzeichnet, dass** zumindest 30 % und insbesondere 33 % einer Fläche des magnetischen Elements (38) im Wesentlichen in einer Umfangsebene zumindest einem seitlichen Teil (44) gegenüberliegen.

3. Rotor nach Anspruch 2, **dadurch gekennzeichnet, dass** die gesamte Fläche des magnetischen Elements (38) im Wesentlichen in einer Umfangsebene zumindest einem seitlichen Teil (44) gegenüberliegt.

4. Rotor nach einem der Ansprüche 1 bis 3, **dadurch gekennzeichnet, dass** der seitliche Teil (44) eine maximale Breite (L1) aufweist, die sich im Wesentlichen in einer Umfangsrichtung zumindest über die Hälfte einer Umfangsbreite (L2) des magnetischen Elements (38) erstreckt.

5. Rotor nach einem der Ansprüche 1 bis 4, **dadurch gekennzeichnet, dass** der seitliche Teil (44) eine maximale Höhe (H1) aufweist, die sich in einer im Wesentlichen axialen Richtung zumindest über die Hälfte einer axialen Höhe (H2) des magnetischen Elements (38) erstreckt.

6. Rotor nach einem der Ansprüche 1 bis 5, **dadurch gekennzeichnet, dass** eine radiale Dicke (E) des seitlichen Teils (44) mit einer radialen Dicke des zentralen Teils (41) im Wesentlichen identisch ist.

7. Rotor nach einem der Ansprüche 1 bis 6, **dadurch gekennzeichnet, dass** das magnetische Element (38) gegenüber zumindest zwei seitlichen Teilen (44) angeordnet ist, die jeweils zu einem Blatt (40) gehören, das einem separaten Polrad (31) zugeordnet ist.

8. Rotor nach einem der Ansprüche 1 bis 6, **dadurch gekennzeichnet, dass** das magnetische Element (38) gegenüber einem einzigen seitlichen Teil (44) angeordnet ist, das zu einem Blatt (40) gehört, das einem der Polräder (31) zugeordnet ist.

9. Rotor nach einem der Ansprüche 1 bis 8, **dadurch gekennzeichnet, dass** das magnetische Element (38) radial zumindest teilweise zwischen zumindest einem seitlichen Teil (44) und einer sich von der Klaue (33) erstreckenden Lippe (45) angeordnet ist.

10. Rotierende elektrische Maschine, insbesondere für ein Kraftfahrzeug, die einen Rotor nach einem der Ansprüche 1 bis 9 umfasst und einen Wechselstromgenerator oder einen Anlasser-Generator oder eine reversible Maschine ausbildet.

## Claims

1. Rotor for a rotating electrical machine, in particular for a motor vehicle, the rotor (12) is mounted so as to be able to rotate about an axis (X) and comprises:
- a rotor body formed by a pair of pole wheels (31), each pole wheel comprising a plurality of claws (33) extending from a flange (32), and a core (34) positioned axially between the flanges, said pole wheels (31) being mounted in such a way that each claw of a pole wheel extends towards the other pole wheel, being arranged between the space existing between two consecutive claws of the other pole wheel;
- at least one magnetic element (38) arranged between two adjacent claws (33) of two distinct pole wheels (31) ;
- a rotor winding (35) arranged radially between the core (34) and the claws (33); and
- an insulation device (39) arranged between the rotor winding (35) and the rotor body, the insulation device comprising a plurality of petals (40), each petal comprises a central part (41) arranged so as to at least partially cover an inner surface of the associated claw (33);
the rotor (12) being **characterized in that** at least one petal (40) comprises a lateral part (44) that is arranged so as to extend facing at least one portion of the magnetic element (38) so as to help to hold the magnetic element (38).

2. Rotor according to Claim 1, **characterized in that** at least 30%, and in particular 33%, of a surface of the magnetic element (38), in an essentially circumferential plane, faces at least one lateral part (44).

3. Rotor according to Claim 2, **characterized in that** the entire surface of the magnetic element (38), in an essentially circumferential plane, faces at least one lateral part (44).

4. Rotor according to any one of Claims 1 to 3, **characterized in that** the lateral part (44) has a maximum width (L1) which extends in an essentially circumferential direction over at least half a circumferential width (L2) of the magnetic element (38) .

5. Rotor according to any one of Claims 1 to 4, **characterized in that** the lateral part (44) has a maximum height (H1) which extends in an essentially axial direction over at least half of an axial height (H2) of the magnetic element (38).

6. Rotor according to any one of Claims 1 to 5, **characterized in that** a radial thickness (E) of the lateral part (44) is essentially identical to a radial thickness of the central part (41).

7. Rotor according to any one of Claims 1 to 6, **characterized in that** the magnetic element (38) is arranged facing at least two lateral parts (44), each belonging to a petal (40) associated with a distinct pole wheel (31).

8. Rotor according to any one of Claims 1 to 6, **characterized in that** the magnetic element (38) is arranged facing a single lateral part (44) belonging to a petal (40) associated with one of the pole wheels (31) .

9. Rotor according to any one of Claims 1 to 8, **characterized in that** the magnetic element (38) is positioned radially, at least in part, between at least one lateral part (44) and a lip (45) extending from the claw (33).

10. Rotating electrical machine, in particular for a motor vehicle, comprising a rotor according to any one of Claims 1 to 9, and forming an alternator or an alternator-starter or a reversible machine.
